# EUROPÄISCHE PATENTSCHRIFT

(11) **EP 2 087 655 B1**
(45) Veröffentlichungstag und Bekanntmachung des Hinweises auf die Patenterteilung: **02.01.2013**
(21) Anmeldenummer: 07820547.3
(22) Anmeldetag: 25.09.2007
(51) Int. Cl.: H04L 12/403, B60H 1/00, G06F 12/08

(54) **VERFAHREN ZUM SENDEN EINES DATENÜBERTRAGUNGSBLOCKS UND VERFAHREN UND SYSTEM ZUM ÜBERTRAGEN EINES DATENÜBERTRAGUNGSBLOCKS**
METHOD FOR SENDING A DATA TRANSFER BLOCK AND METHOD AND SYSTEM FOR TRANSFERRING A DATA TRANSFER BLOCK
PROCÉDÉ POUR ENVOYER UN BLOC DE TRANSMISSION DE DONNÉES ET PROCÉDÉ ET SYSTÈME POUR TRANSMETTRE UN BLOC DE TRANSMISSION DE DONNÉES

(30) Priorität: 31.10.2006 DE 102006051866
(43) Veröffentlichungstag der Anmeldung: 12.08.2009
(73) Patentinhaber: Robert Bosch GmbH, 70442 Stuttgart (DE)
(72) Erfinder: NEWALD, Josef, 70469 Stuttgart (DE)
(86) Internationale Anmeldenummer: PCT/EP2007/060144
(87) Internationale Veröffentlichungsnummer: WO 2008/052849

(56) Entgegenhaltungen:
- US-B1- 7 110 457

## Beschreibung

### STAND DER TECHNIK

Die vorliegenden Erfindung betrifft ein Verfahren zum Senden eines Datenübertragungsblocks und ein Verfahren und ein System zum Übertragen von Datenübertragungsblöcken, insbesondere mittels eines Flexray-Busses.

Der Flexray-Bus und das zugehörige Flexray-Protokoll sind beispielsweise in der Druckschrift EP 1355 456 A1 beschrieben.

Gemäß dem mit einem Zeitmultiplexverfahren arbeitenden Flexray-Protokoll werden Rahmen oder Datenübertragungsblöcke in einem Kommunikationszyklus mit einem statischen Segment und/oder einem dynamischen Segment übertragen.

Im Sinne dieser Anmeldung werden die Ausdrücke Rahmen, Datenrahmen, Datenübertragungsblock, Frame, Botschaft und Nachricht synonym verwandt und bezeichnen Gleiches.

Ein Datenübertragungsblock beinhaltet dabei ein Kopfsegment (Header), ein Datensegment (Payload) und ein Prüfsummensegment (CRC Data). Ein Datensegment beinhaltet ein oder mehrere Dateneinheiten, welche auch eine unterschiedliche Größe aufweisen können. Der Datenübertragungsblock wird von einer ersten Sende-/Empfangsvorrichtung oder Knoten, der mit dem Flexray-Bus gekoppelt ist, an eine zweite Sende-/Empfangsvorrichtung oder Knoten, der ebenfalls mit dem Flexray-Bus gekoppelt ist, übertragen.

Zur Anzeige, ob die jeweilige Dateneinheit aktuell ist oder veraltete Daten an der Stelle der entsprechenden Dateneinheit im Datenübertragungsblock übertragen werden, kann jeweils ein Gültigkeitsbit vorgesehen werden. Ein auf Eins gesetztes Gültigkeitsbit zeigt an, dass die entsprechende Dateneinheit gültig ist. Ein auf Null gesetztes Gültigkeitsbit zeigt dagegen an, dass die entsprechende Dateneinheit ungültig ist.

Allerdings müssen sämtliche Gültigkeitsbits eines Datenübertragungsblocks vor einem erneuten Schreiben und anschließendem Senden gelöscht werden, um zu vermeiden, dass ungültige Dateneinheiten mit entsprechenden Gültigkeitsbits, die noch eine Eins aufweisen, gesendet werden. Ein Problem kann insbesondere dann auf der Empfängerseite entstehen, wenn ein Gültigkeitsbit, das gelöscht werden hätte sollen, nicht rechtzeitig vor dem Senden gelöscht werden konnte. Hier können auf der Empfängerseite nicht detektierbare Fehler entstehen.

Druckschrift US-B1-7 110 457 zeit ein Verfahren und ein System gemäßβ dem Oberbegriff von Ansprüchen 1,8 und 10.

### VORTEILE DER ERFINDUNG

Das erfindungsgemäße Verfahren zum Senden eines Datenübertragungsblocks mit den Merkmalen des Anspruchs 1 und das erfindungsgemäße Verfahren bzw. System zum Übertragen eines Datenübertragungsblocks mit den Merkmalen des Anspruchs 8 bzw. mit den Merkmalen des Anspruchs 10 weist den Vorteil auf, dass auf das Löschen der jeweiligen herkömmlichen Gültigkeitsbits verzichtet werden kann. Auch muss das aufwändige Verwalten des Löschens der Gültigkeitsbits erfindungsgemäß nicht durchgeführt werden.

Weiter kann erfindungsgemäß stets eine sichere Aussage auf der Empfängerseite getroffen werden, ob eine Dateneinheit eines empfangenen Datenübertragungsblocks gültige oder nicht gültige Daten aufweist.

Die der vorliegenden Erfindung zugrunde liegende Idee besteht im Wesentlichen darin, jeweils ein Gültigkeitsdatum für vorbestimmte Dateneinheiten vorzusehen, die aufgrund ihrer Bedeutung, ihrer Sicherheitsrelevanz oder dergleichen mit einer Gültigkeitsangabe auszustatten sind, wobei das Gültigkeitsdatum eine Historie-Information beinhaltet, die eine Änderung des Gültigkeitsdatums, insbesondere nach einem erneuten Schreibvorgang der entsprechenden Dateneinheit indiziert.

Erfindungsgemäß werden als Ausgestaltungen des Gültigkeitsdatums ein Toggle-Bit oder ein N-Bit-Zähler vorgeschlagen, welche beide dazu geeignet sind, neben der Gültigkeitsinformation für die entsprechende Dateneinheit auch eine Historie-Information bereitzustellen.

Demgemäß wird ein Verfahren zum Senden eines Datenübertragungsblocks vorgeschlagen, wobei der Datenübertragungsblock wenigstens ein Datensegment mit einer vorbestimmten Anzahl von einer oder mehreren mit einer Gültigkeitsangabe zu kennzeichnenden Dateneinheiten und ein Kopfsegment aufweist, wobei das Verfahren folgende Schritte beinhaltet:
a) Schreiben einer Dateneinheit in einen für das Datensegment vorbestimmten ersten Bereich eines Ausgangsregisters, aus welchem der zwischengespeicherte Datenübertragungsblock zu einem vorbestimmten Sendezeitpunkt mittels eines Zeitmultiplexverfahrens über ein Bussystem gesendet wird;
b) Schreiben eines als ein Toggle-Bit oder als ein N-Bit-Zähler ausgebildeten Gültigkeitsdatums in einen für das Kopfsegment vorbestimmten zweiten Bereich des Ausgangsregisters, wobei das jeweilige Gültigkeitsdatum die Gültigkeit der entsprechenden geschriebenen Dateneinheit angibt. Dabei kann das Kopfsegment beispielsweise im Payload-Bereich und/oder Im Header-Bereich des Flexray-Frames angeordnet sein;
c) Freigeben zum Senden des in dem Ausgangsregister zwischengespeicherten Dätenübertragungsblockes, nachdem die jeweilige Dateneinheit und das entsprechende Gültigkeitsdatum in das Ausgangsregister geschrieben sind;
d) Wiederholen der Schritte (a)-(c) bis die vorbestimmte Anzahl der Dateneinheiten und die entsprechenden Gültigkeitsdaten geschrieben sind oder der vorbestimmte Sendezeitpunkt erreicht ist; und
e) Senden des freigegebenen, in dem Ausgangsregister zwischengespeicherten Datenübertragungsblockes an dem Sendezeitpunkt.

Des Weiteren wird ein Verfahren zum Übertragen von Datenübertragungsblöcken vorgeschlagen, welches die folgenden Schritte aufweist:
- Senden eines Datenübertragungsblocks mittels einer ersten Sende-/Empfangsvorrichtung gemäß dem oben beschriebenen Verfahren zum Senden eines Datenübertragungsblocks;
- Empfangen des gesendeten Datenübertragungsblocks mittels einer zweiten Sende-/Empfangsvorrichtung, welche mittels eines Bussystems mit der ersten Sende-/Empfangsvorrichtung gekoppelt ist;
- Überprüfen der in dem empfangenen Datenübertragungsblock beinhalteten Gültigkeitsdaten; und
- Extrahieren und Speichern der Dateneinheiten, deren zugehöriges Gültigkeitsdatum gültig ist, und Verwerfen der Dateneinheiten, deren zugehöriges Gültigkeitsdatum ungültig ist, durch die zweiten Sende-/Empfangsvorrichtung.

Außerdem wird ein System zum Übertragen eines Datenübertragungsblocks vorgeschlagen, wobei der Datenübertragungsblock wenigstens ein Datensegment mit einer vorbestimmten Anzahl von einer oder mehreren mit einer Gültigkeitsangabe zu kennzeichnenden Dateneinheiten und ein Kopfsegment aufweist mit:
- einer ersten Sende-/Empfangsvorrichtung, welche dazu geeignet ist, ein Verfahren zum Senden eines Datenübertragungsblockes nach Anspruch 1 oder einem oder mehreren der Ansprüche 2-7 durchzuführen;
- einem Bussystem, welches die erste Sende-/Empfangsvorrichtung zumindest mit einer zweiten Sende-/Empfangsvorrichtung koppelt; und
- der zweiten Sende-/Empfangsvorrichtung, welche aufweist:
- ein erstes Mittel, welches den von der ersten Sende-/Erripfangsvorrichtung gesendeten Datenübertragungsblock empfängt;
- ein zweites Mittel, welches die in dem empfangenen Datenübertragungsblock beinhalteten Gültigkeitsdaten überprüft; und
- ein drittes Mittel, welches dazu geeignet ist, die Dateneinheiten, deren zugehöriges Gültigkeitsdatum gültig ist, zu extrahieren und zu speichern und diejenigen Dateneinheiten, deren zugehöriges Gültigkeitsdatum ungültig ist, zu verwerfen.

In den Unteransprüchen finden sich vorteilhafte Weiterbildungen und Ausgestaltungen des in Anspruch 1 bzw. des in Anspruch 8 angegebenen Verfahrens und des in Anspruch 10 angegebenen Systems zum Senden bzw. Übertragen eines Datenübertragungsblocks.

Gemäß einer bevorzugten Weiterbildung der Erfindung weist der Datenübertragungsblock ein Prüfsummensegment auf, wobei eine Prüfsumme über zumindest einen vorbestimmten Teil des Datensegments und/oder des Kopfsegments berechnet wird und die berechnete Prüfsumme in einen für das Prüfsummensegment im vorbestimmten dritten Bereich des Ausgangszwischenspeichers gespeichert wird. Die Prüfsumme ist beispielsweise eine CRC-Prüfsumme (CRC: Cyclic Redundancy Check). Die CRC-Prüfsummen werden insbesondere bei der Fehlererkennung eingesetzt Theoretisch können sie auch zur Fehlerkorrektur dienen, allerdings ist der Hamming-Abstand beim Flexray-Protokoll dafür in der Regel nicht ausreichend und der Aufwand dafür sehr hoch.

Gemäß einer bevorzugten Ausgestaltung der Erfindung ist das Bussystem als ein Flexray-Bussystem ausgebildet.

Gemäß einer weiteren bevorzugten Ausgestaltung ist das Gültigkeitsdatum als das Toggle-Bit ausgebildet, wobei das jeweilige Toggle-Bit bei jedem Schreiben der entsprechenden Dateneinheit umgeschaltet wird. Das Toggle-Bit wird also nach jedem Schreibvorgang abwechselnd auf den Wert 0 und danach auf den Wert 1 gesetzt. Demnach wird auch abwechselnd der Wert 0 und danach der Wert 1 als gültig interpretiert. Folglich wird die Bedeutung des Toggle-Bits periodisch invertiert. Vorteilhafterweise können durch die Ausgestaltung des Toggle-Bits solche Fehler erkannt werden, bei denen das Gültigkeitsdatum einen vorbestimmten Wert über einen längeren Zeitraum unabhängig von der geschriebenen entsprechenden Dateneinheit aufweist.

Gemäß einer weiteren bevorzugten Ausgestaltung ist das Gültigkeitsdatum als der N-Bit-Zähler ausgebildet, wobei der jeweilige N-Bit-Zähler bei jedem Schreiben der entsprechenden Dateneinheit um einen vorbestimmten Zählerbereich inkrementiert oder dekrementiert wird. Infolge der sich ergebenden Redundanz durch die N Bits ergibt sich eine höhere Sicherheit. Beispielsweise ergibt sich bei einem 8-Bit-Zähler eine Erhöhung der Sicherheit um den Faktor von etwa 250. Vorzugsweise wird der jeweilige N-Bit-Zähler bei jedem Schreiben der entsprechenden Dateneinheit um Eins inkrementiert oder dekrementiert.

Gemäß einer weiteren bevorzugten Ausgestaltung werden die N-Bit-Zähler für die verschiedenen Dateneinheiten, jeweils mit einem anderen Initialisierungswert initialisiert. Somit können die verschiedenen N-Bit-Zähler gut voneinander unterschieden werden.

Gemäß einer weiteren bevorzugten Weiterbildung, bei der das Gültigkeitsdatum als der N-Bit-Zähler ausgebildet ist, wird der jeweilige N-Bit-Zähler bei jedem Schreiben der entsprechenden Dateneinheit um einen vorbestimmten Zählerbereich mittels der ersten Sende-/Empfangsvorrichtung inkrementiert oder dekrementiert und der jeweilige Zählerstand des N-Bit-Zählers wird mittels einer Speichervorrichtung der zweiten Sende-/Empfangsvorrichtung gespeichert. Vorteilhafterweise kann somit die zweite Sende-/Empfangsvorrichtung, welche den von der ersten Sende-/Empfangsvorrichtung gesendeten Datenübertragungsblock empfängt, jeweils den aktuellen Wert des N-Bit-Zählers mit dem vorherigen Wert des N-Bit-Zählers vergleichen und somit eine potenzielle Änderung dessen feststellen.

Gemäß einer weiteren bevorzugten Weiterbildung weist die zweite Sende-/Empfangsvorrichtung eine Speichervorrichtung auf, welche dazu geeignet ist, jeweils den Zählerstand eines als N-Bit-Zählers ausgebildeten Gültigkeitsdatums zu speichern.

Gemäß einer weiteren bevorzugten Weiterbildung, bei dem das Bussystem als ein Flexray-Bussystem ausgebildet ist, weist die erste Sende-/Empfangsvorrichtung und/oder die zweite Sende-/Empfangsvorrichtung eine Flexray-Kommunikations-Steuervorrichtung auf.

### ZEICHNUNGEN

Ausführungsbeispiele der Erfindung sind in den Zeichnungen dargestellt und in der nachfolgenden Beschreibung näher erläutert. Es zeigen:
- Figur 1:: ein schematisches Ablaufdiagramm eines ersten Ausführungsbeispiels des erfindungsgemäßen Verfahrens;
- Figur 2:: ein schematisches Blockschaltbild eines bevorzugten Ausführungsbeispiels des Formats des Datenübertragungsblocks gemäß der vorliegenden Erfindung;
- Figur 3:: ein schematisches Ablaufdiagramm eines zweiten Ausführungsbeispiels des erfindungsgemäßen Verfahrens; und
- Figur 4:: ein schematisches Blockschaltbild eines bevorzugten Ausführungsbeispiels des Systems zur Übertragung von Datenübertragungsblöcken gemäß der vorliegenden Erfindung.

### BESCHREIBUNG DER AUSFÜHRUNGSBEISPIELE

In den Figuren bezeichnen gleiche Bezugszeichen gleiche oder funktionsgleiche Bestandteile.

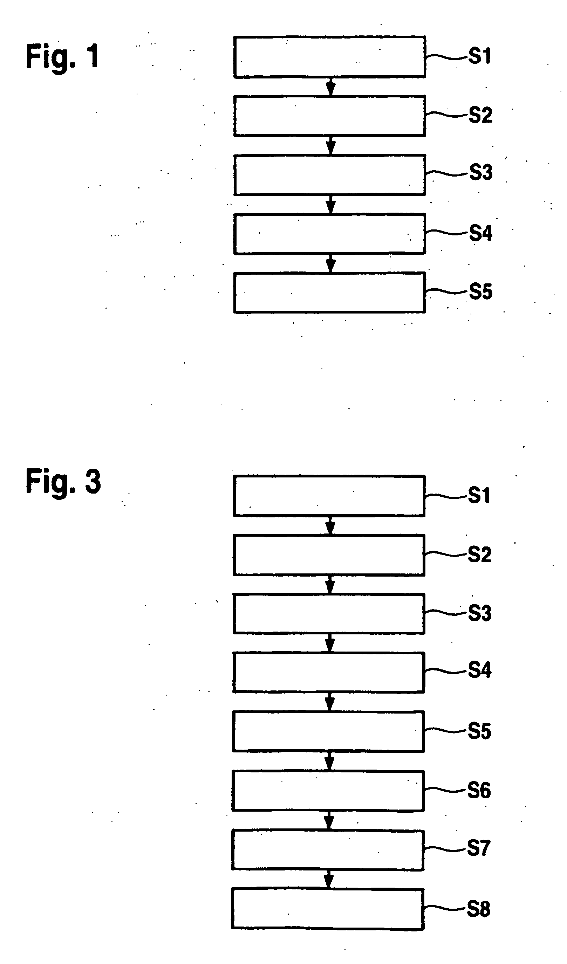

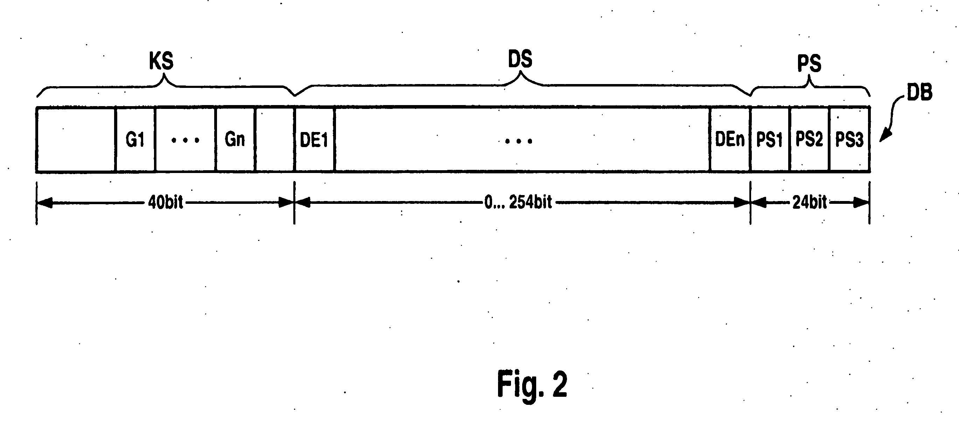

In Figur 1 ist ein schematisches Ablaufdiagramm eines ersten Ausführungsbeispiels des erfindungsgemäßen Verfahrens zum Senden eines Datenübertragungsblocks DB dargestellt. Der Datenübertragungsblock DB weist wenigstens ein Datensegment DS mit einer vorbestimmten Anzahl von einer oder mehreren mit einer Gültigkeitsangabe zu kennzeichnenden Dateneinheiten DE1-DEn und ein Kopfsegment KS auf (siehe Figur 2).

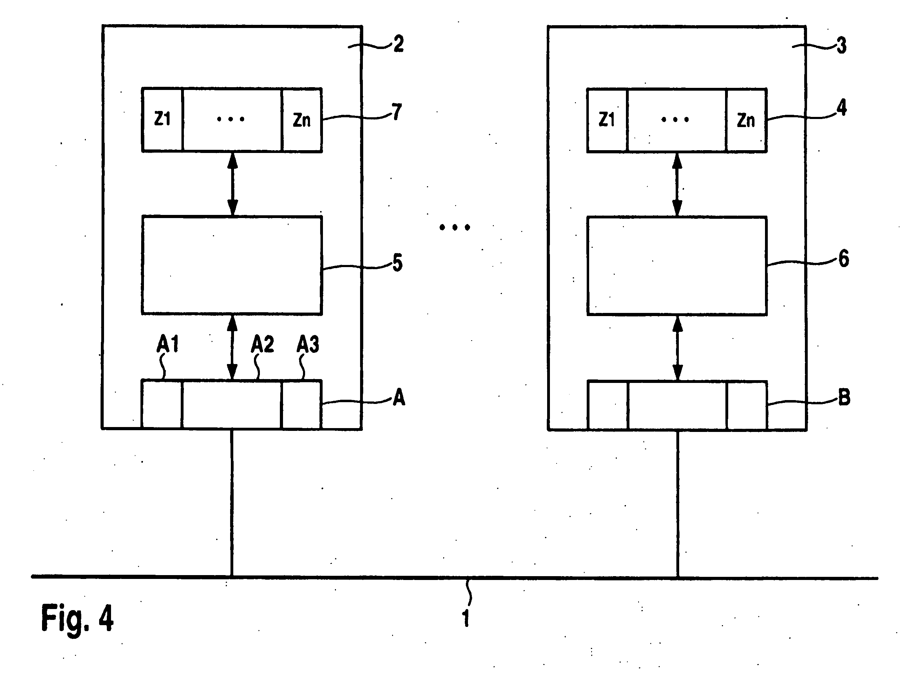

Nachfolgend wird das erfindungsgemäße Verfahren anhand des Blockschaltbildes in Figur 1 unter Verweis auf das schematische Blockschaltbild des Formats des Datenübertragungsblocks DB gemäß Figur 2 und unter Verweis auf das schematische Blockschaltbild des Systems gemäß Figur 4 beschrieben. Das erste Ausführungsbeispiel des erfindungsgemäßen Verfahrens gemäß Figur 1 weist folgende Verfahrensschritte S1-S5 auf:

### Verfahrensschritt S1:

Es wird eine Dateneinheit DE1-DEn in einen für das Datensegment DS vorbestimmten ersten Bereich A1 eines Ausgangszwischenspeichers A geschrieben, aus welchem der zwischengespeicherte Übertragungsblock DB zu einem vorbestimmten Sendezeitpunkt mittels eines Zeitmultiplexerverfahrens über ein Bussystem 1 gesendet wird. Der Datenübertragungsblock DB kann neben einer oder mehrerer mit einer Gültigkeitsangabe zu kennzeichnenden Dateneinheiten auch andere, nicht zu sichernde Dateneinheiten aufweisen. Vorzugsweise ist das Bussystem 1 ein Flexray-Bussystem.

### Verfahrensschritt S2:

Ein als ein Toggle-Bit oder als ein N-Bit-Zähler ausgebildetes Gültigkeitsdatum G1-Gn wird in ein für das Kopfsegment KS vorbestimmten zweiten Bereich A2 des Ausgangszwischenspeichers A geschrieben, wobei das jeweilige Gültigkeitsdatum G1-Gn die Gültigkeit der entsprechenden geschriebenen Däteneinheit DE1-DEn angibt.

Gemäß einer ersten Alternative der vorliegenden Erfindung kann das Gültigkeitsdatum G1-Gn als Toggle-Bit ausgebildet sein, wobei das jeweilige Töggle-Bit bei jedem Schreiben der entsprechenden Dateneinheit DE1-DEn umgeschaltet wird. Als eine zweite Alternative der vorliegenden Erfindung kann das Gültigkeitsdatum G1-Gn als N-Bit-Zähler ausgebildet sein, wobei der jeweilige N-Bit-Zähler bei jedem Schreiben der entsprechenden Dateneinheit DE1-DEn um einen vorbestimmten Zählerbereich inkrementiert oder dekrementiert wird.

Vorzugsweise werden die N-Bit-Zähler für die verschiedenen Dateneinheiten DE1-DEn jeweils mit einem verschiedenen Initialisierungswert zu ihrer Unterscheidbarkeit initialisiert. Insbesondere wird der jeweilige N-Bit-Zähler bei jedem Schreiben der entsprechenden Dateneinheit DE1-DEn um Eins inkrementiert oder dekrementiert.

### Verfahrensschritt S3:

Der in dem Ausgangszwischenspeicher A zwischengespeicherte Datenübertragungsblock DB wird zum Senden freigegeben, nachdem die jeweilige Dateneinheit DE1-DEn und das entsprechende Gültigkeitsdatum G1-Gn in den Ausgangszwischenspeicher A geschrieben sind.

### Verfahrensschritt S4:

Die Verfahrensschritt S1 bis S3 werden wiederholt, bis die vorbestimmte Anzahl der Dateneinheiten DE1-DEn und die entsprechenden Gültigkeitsdaten G1-Gn geschrieben sind oder der vorbestimmte Sendezeitpunkt, der durch das Zeitmultiplexverfahren definiert ist, erreicht ist.

### Verfahrensschritt S5:

Der freigegebene, in dem Ausgangszwischenspeicher A zwischengespeicherte Datenübertragungsblock DB wird an dem Sendezeitpunkt über das Bussystem 1 versendet.

In Figur 3 ist ein schematisches Ablaufdiagrämm eines zweiten Ausführungsbeispiels des erfindungsgemäßen Verfahrens dargestellt Das zweite Ausführungsbeispiel gemäß Figur 3 weist die Verfahrensschritte S1 bis S8 auf..Dabei entsprechen die Verfahrensschritte S1 bis S5 gemäß Figur 3 den Verfahrensschritten S1 bis S5 gemäß Figur 1. Aus Gründen der Übersichtlichkeit wird auf deren erneute Darstellung verzichtet Das zweite Ausführungsbeispiel des erfindungsgemäßen Verfahrens gemäß Figur 3 weist also die Verfahrensschritte S1 bis S5, die mit Bezug auf Figur 1 bereits detailliert erläutert sind, und die folgenden Verfahrensschritte S6 bis S7 auf.

### Verfahrensschritt S6:

Der von der ersten Sende-/Empfangsvorrichtung 2 gesendete Datenübertragungsblock DB wird von einer zweiten Sende-/Empfangsvorrichtung 3 empfangen. Dazu ist die erste Sende-/Empfangsvorrichtung 2 mittels eines Bussystems 1 mit der zweiten Sende-/Empfangsvorrichtung 3 gekoppelt

### Verfahrensschritt S7:

Die in dem empfangenen Datenübertragungsblock DB beinhalteten Gültigkeitsdaten G1-Gn werden auf ihre gültigkeit überprüft.

### Verfahrensschritt S8:

Diejenigen Dateneinheiten, DE1-DEn, deren zugehöriges Gültigkeitsdatum G1-Gn gültig ist, werden extrahiert und gespeichert. Diejenigen Dateneinheiten DE1-DEn, deren zugehöriges Gültigkeitsdatum G1-Gn ungültig ist, werden vorzugsweise verworfen.

Vorzugsweise wird, falls das Gültigkeitsdatum G1-Gn als der N-Bit-Zähler ausgebildet ist, der jeweilige N-Bit-Zähler bei jedem Schreiben der entsprechenden Dateneinheit DE1-DEn um einen vorbestimmten Zählerbereich mittels der ersten Sende-/Empfangsvorrichtung 2 inkrementiert oder alternativ dekrementiert und der jeweilige Zählerstand des N-Bit-Zählers wird mittels einer Speichervorrichtung 4 der zweiten Sende-/Empfangsvorrichtung 3 gespeichert.

Figur 4 zeigt ein schematisches Blockschaltbild eines bevorzugten Ausführungsbeispiels des Systems zur Übertragung von Datenübertragungsblöcken DB, welche jeweils wenigstens ein Datensegment DS mit einer vorbestimmten Anzahl von einer oder mehreren mit einer Gültigkeitsangabe zu kennzeichnenden Dateneinheiten D1-DEn und ein Kopfsegment KS aufweisen. Das System gemäß Figur 4 weist eine vorbestimmte Anzahl von Sende-/Empfangsvorrichtungen 2, 3 auf, welche über ein Bussystem 1 miteinander gekoppelt sind. Ohne Einschränkung der Allgemeinheit sind in Figur 4 nur eine erste Sende-/Empfangsvorrichtung 2 und eine zweite Sende-/Empfangsvorrichtung 3 abgebildet.

Die erste Sende-/Empfangsvorrichtung 2 ist dazu geeignet, ein Verfahren zum Senden eines Datenübertragungsblocks, wie zu Figur 1 beschrieben, durchzuführen.

Die zweite Sende-/Empfangsvorrichtung 3 weist zumindest ein erstes Mittel, ein zweites Mittel und ein drittes Mittel auf. Das erste Mittel ist dazu geeignet, den von der ersten Sende-/Empfangsvorrichtung 2 gesendeten Datenübertragungsblock DB zu empfangen. Das zweite Mittel ist dazu geeignet, die in dem empfangenen Datenübertragungsblock DB beinhalteten Gültigkeitsdaten G1-Gn zu überprüfen. Ferner ist das dritte Mittel dazu geeignet, die Dateneinheiten DE1-DEn zu extrahieren und zu speichern, deren zugehöriges Gültigkeitsdatum G1-Gn gültig ist, und insbesondere diejenigen Dateneinheiten DE1-DEn, deren zugehöriges Gültigkeitsdatum ungültig ist, zu verwerfen.

Vorzugsweise weist die zweite Sende-/Empfangsvorrichtung 3 eine Speichervorrichtung 4 auf, welche dazu geeignet ist, jeweils einen Zählerstand Z1-Zn eines als N-Bit-Zähler ausgebildeten Gültigkeitsdatum G1-Gn zu speichern. Somit ist der zweiten Sende-/Empfangsvorrichtung 3 ermöglicht, den jeweiligen Zählerstand Z1-Zn des jeweiligen N-Bit-Zählers der aktuell empfangenen Dateneinheit DE1-DEn mit dem N-Bit-Zähler der vorherigen empfangenen Dateneinheit DE1-DEn zu vergleichen.

Vorzugsweise weisen die erste Sende-/Empfangseinrichtung 2 und die zweite Sende-/Empfangsvorrichtung 3 eine Flexray-Kommunikations-Steuervorrichtung 5, 6 auf. Die erste Flexray-Kommunikations-Steuervorrichtung 5 ist insbesondere dazu geeignet, den Ausgangszwischenspeicher A und eine zweite Speichervorrichtung 7, welche vorzugsweise die jeweiligen Zählerstände Z1-Zn zwischenspeichert, zu steuern. Die zweite Flexray-Kommunikations-Steuervorrichtung 6 ist insbesondere dazu geeignet, einen Eingangszwischenspeicher B und die erste Speichervorrichtung 4 zu steuern.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

## Patentansprüche

1. Verfahren zum Senden eines Datenübertragungsblockes (DB), welcher wenigstens ein Datensegment (DS) mit einer vorbestimmten Anzahl von einer oder mehreren mit einer Gültigkeitsangabe zu kennzeichnenden Dateneinheiten (DE1-DEn) und ein Kopfsegment (KS) aufweist, worin das Verfahren darin gekennzeichnet ist, daß es die folgenden Schritte einschließt
a) Schreiben einer Dateneinheit (DE1-DEn) in einen für das Datensegment (DS) vorbestimmten ersten Bereich (A1) eines Ausgangsregisters (A), aus welchem der zwischengespeicherte Datenübertragungsblock (DB) zu einem vorbestimmten Sendezeitpunkt mittels eines Zeitmultiplexverfahrens über ein Bussystem (1) gesendet wird;
b) Schreiben eines als ein Toggle-Bit oder als ein N-Bit-Zähler ausgebildeten Gültigkeitsdatums (G1-Gn) in einen für das Kopfsegment (KS) vorbestimmten zweiten Bereich (A2) des Ausgangsregisters (A), wobei das jeweilige Gültigkeitsdatum (G1-Gn) die Gültigkeit der entsprechenden geschriebenen Dateneinheit (DE1-DEn) angibt;
c) Freigeben zum Senden des in dem Ausgangsregister (A) zwischengespeicherten Datenübertragungsblockes (DB), nachdem die jeweilige Dateneinheit (DE1-DEn) und das entsprechende Gültigkeitsdatum (G1-Gn) in das Ausgangsregister (A) geschrieben sind;
d) Wiederholen der Schritte (a)-(c) bis die vorbestimmte Anzahl der Dateneinheiten (DE1-DEn) und die entsprechenden Gültigkeitsdaten (G1-Gn) geschrieben sind oder der vorbestimmte Sendezeitpunkt erreicht ist; und
e) Senden des freigegebenen, in dem Ausgangsregister (A) zwischengespeicherten Datenübertragungsblockes (DB) an dem Sendezeitpunkt.

2. Verfahren nach Anspruch 1, bei dem der Datenübertragungsblock (DB) ein Prüfsummensegment (PS) aufweist, wobei eine Prüfsumme (PS1-PS3) über
zumindest einen vorbestimmten Teil des Datensegmentes (DS) und/oder des Kopfsegmentes (KS) berechnet wird und die berechnete Prüfsumme (PS1-PS3) in einen für das Prüfsummensegment (PS) vorbestimmten dritten Bereich (A3) des Ausgangsregisters (A) gespeichert wird.

3. Verfahren nach Anspruch 1 oder 2, bei dem das Bussystem (1) als ein Flexray-Bussystem ausgebildet ist

4. Verfahren nach Anspruch 1 oder einem der Ansprüche 2 oder 3, bei dem das Gültigkeitsdatum (G1-Gn) als das Toggle-Bit ausgebildet ist, wobei das jeweilige Toggle-Bit bei jedem Schreiben der entsprechenden Dateneinheit (DE1-DEn) umgeschaltet wird.

5. Verfahren nach Anspruch 1 oder einem der Ansprüche 2 oder 3, bei dem das Gültigkeitsdatum (G1-Gn) als der N-Bit-Zähler ausgebildet ist, wobei der jeweilige N-Bit-Zähler bei jedem Schreiben der entsprechenden Dateneinheit (DE1-DEn) um einen vorbestimmten Zählerbereich inkrementiert oder dekrementiert wird.

6. Verfahren nach Anspruch 5, bei dem die N-Bit-Zähler für die verschiedenen Dateneinheiten (DE1-DEn) jeweils mit einem verschiedenen Initialisiefungswert initialisiert werden.

7. Verfahren nach Anspruch 5 oder 6, bei dem der jeweilige N-Bit-Zähler bei jedem Schreiben der entsprechenden Dateneinheit (DE1-DEn) um Eins inkrementiert oder dekrementiert wird

8. Verfahren zum Übertragen von Datenübertragungsblöcken (DB), mit den Schritten:
a) Senden eines Übertragungsblockes (DB) mittels einer ersten Sende-/Empfangsvorrichtung (2) gemäß dem Verfahren zum Senden eines Datenübertragungsblockes (DB) nach Anspruch 1 oder einem oder mehreren der Ansprüche 2 - 7;
b) Empfangen des gesendeten Datenübertragungsblockes (D8) mittels einer zweiten Sende-/Empfangsvorrichtung (3), welche mittels des Bussystems (1) mit der ersten Sende-/Empfangsvorrichtung (2) gekoppelt ist;
c) Überprüfen der in dem empfangenen Datenübertragungsbock (DB) beinhalteten Gültigkeitsdaten (G1-Gn); und
d) Extrahieren und Speichern der Dateneinheiten (DE1-DEn), deren zugehöriges Gültigkeitsdatum (G1-Gn) gültig ist, und Verwerfen der Dateneinheiten (DE1-DEn), deren zugehöriges Gültigkeitsdatum (G1-Gn) ungültig ist, mittels der zweiten Sende-/Empfangsvorrichtung (3).

9. Verfahren nach Anspruch 8, bei dem das Gültigkeitsdatum (G1-Gn) als der N-Bit-Zähler ausgebildet ist, wobei der jeweilige N-Bit-Zähler bei jedem Schreiben der entsprechenden Dateneinheit (DE1-DEn) um einen vorbestimmten Zählerbereich mittels der ersten Sende-/Empfangsvorrichtung (2) inkrementiert oder dekrementiert wird und der jeweiligen Zählerstand des N-Bit-Zählers mittels einer Speichervorrichtung (4) der zweiten Sende-/Empfangsvorrichtung (3) gespeichert wird:

10. System zum Übertragen eines Datenübertragungsblockes (DB), welcher wenigstens ein Datensegment (DS) mit einer vorbestimmten Anzahl von einer oder mehreren mit einer Gültigkeitsangabe zu kennzeichnenden Dateneinheiten (DE1-DEn) und ein Kopfsegment (KS) aufweist, worin das System darin gekennzeichnet ist, daß es die folgenden Merkmale einschließt
a) einer ersten Sende-/Empfangsvorrichtung (2), welche dazu geeignet ist, ein Verfahren zum Senden eines Datenübertragungsblockes (DB) nach Anspruch 1 oder einem oder mehreren der Ansprüche 2-7 durchzuführen;
b) einem Bussystem (1), welches die erste Sende-/Empfangsvorrichtung (2) zumindest mit einer zweiten Sende-/Empfangsvorrichtung (3) koppelt: und
c) der zweiten Sende-/Empfangsvorrichtung (3), welche aufweist:
(c1) ein erstes Mittel, welches den von der ersten Sende-/Empfangsvorrichtung (2) gesendeten Datenübertragungsblock (D8) empfängt;
(c2) ein zweites Mittel, welches die in dem empfangenen Datenübertra-gungsblock (DB) beinhalteten Gültigkeitsdaten (G1-Gn) überprüft; und
(c3) ein drittes Mittel, welches dazu geeignet ist, die Dateneinheiten (DE1-DEn), deren zugehöriges Gültigkeitsdatum (G1-Gn) gültig ist, zu extrahieren und zu speichern und diejenigen Dateneinheiten (DE1-DEn), deren zugehöriges Gültigkeitsdatum (G1-Gn) ungültig ist, zu verwerfen.

11. System nach Anspruch 10, bei dem die zweite Sende-/Empfangsvorrichtung (3) eine Speichervorrichtung (4) aufweist, welche dazu geeignet ist, jeweils einen Zählerstand (Z1-Zn) eines als N-Bit-Zählers ausgebildeten Gültigkeitsdatums (G1-Gn) zu speichern.

12. System nach Anspruch 10 oder 11, bei dem das Bussystem (1) als ein Flexray-Bussystem ausgebildet ist und die erste Sende-/Empfangsvorrichtung (2) und/oder die zweite Sende-/Empfangsvorrichtung (3) eine Flexray-Kommunikations-Steuervorrichtung (5, 6) aufweist.

## Claims

1. Method for sending a data transmission block (DB) which has at least one data segment (DS) having a predetermined number of one or more data units (DE1-DEn), that is/are to be denoted by a validity statement, and a header segment (KS), wherein the method is **characterized in that** it encompasses the following steps:
a) a data unit (DE1-DEn) is written to a first area (A1) - predetermined for the data segment (DS) - of an output register (A), from which the buffer-stored data transmission block (DB) is sent via a bus system (1) at a predetermined transmission time by means of a time-division multiplexing method;
b) a validity data item (G1-Gn) in the form of a toggle bit or in the form of an N-bit counter is written to a second area (A2) - predetermined for the header segment (KS) - of the output register (A), the respective validity data item (G1-Gn) indicating the validity of the relevant written data unit (DE1-DEn);
c) the data transmission block (DB) buffer-stored in the output register (A) is cleared for sending after the respective data unit (DE1-DEn) and the relevant validity data item (G1-Gn) have been written to the output register (A);
d) steps (a)-(c) are repeated until the predetermined number of data units (DE1-DEn) and the relevant validity data (G1-Gn) have been written or the predetermined transmission time has been reached; and
e) the cleared data transmission block (DB) buffer-stored in the output register (A) is sent at the transmission time.

2. Method according to Claim 1, in which the data transmission block (DB) has a checksum segment (PS), wherein a checksum (PS1-PS3) is calculated over at least a predetermined portion of the data segment (DS) and/or of the header segment (KS) and the calculated checksum (PS1-PS3) is stored in a third area (A3) - predetermined for the checksum segment (PS) - of the output register (A).

3. Method according to Claim 1 or 2, in which the bus system (1) is in the form of a Flexray bus system.

4. Method according to Claim 1 or either of Claims 2 and 3, in which the validity data item (G1-Gn) is in the form of a toggle bit, wherein the respective toggle bit is changed over whenever the relevant data unit (DE1-DEn) is written.

5. Method according to Claim 1 or either of Claims 2 and 3, in which the validity data item (G1-Gn) is in the form of an N-bit counter, wherein the respective N-bit counter is incremented or decremented by a predetermined counter range whenever the relevant data unit (DE1-DEn) is written.

6. Method according to Claim 5, in which the N-bit counters for the different data units (DE1-DEn) are each initialized with a different initialization value.

7. Method according to Claim 5 or 6, in which the respective N-bit counter is incremented or decremented by one whenever the relevant data unit (DE1-DEn) is written.

8. Method for transmitting data transmission blocks (DB), having the following steps:
a) a transmission block (DB) is sent by means of a first transmission/reception apparatus (2) according to the method for sending a data transmission block (DB) according to Claim 1 or one or more of Claims 2-7;
b) the sent data transmission block (DB) is received by means of a second transmission/reception apparatus (3), which is coupled to the first transmission/reception apparatus (2) by means of the bus system (1);
c) the validity data (G1-Gn) which the received data transmission block (DB) contains are checked; and
d) the data units (DE1-DEn) for which the associated validity data item (G1-Gn) is valid are extracted and stored, and the data units (DE1-DEn) for which the associated validity data item (G1-Gn) is invalid are rejected, by means of the second transmission/reception apparatus (3).

9. Method according to Claim 8, in which the validity data item (G1-Gn) is in the form of the N-bit counter, wherein the respective N-bit counter is incremented or decremented by a predetermined counter range by means of the first transmission/reception apparatus (2) whenever the relevant data unit (DE1-DEn) is written, and the respective counter reading of the N-bit counter is stored by means of a memory apparatus (4) of the second transmission/reception apparatus (3).

10. System for transmitting a data transmission block (DB) which has at least one data segment (DS) having a predetermined number of one or more data units (DE1-DEn), that is/are to be denoted by a validity statement, and a header segment (KS), wherein the system is **characterized in that** it encompasses the following features:
a) a first transmission/reception apparatus (2) which is designed to carry out a method for sending a data transmission block (DB) according to Claim 1 or one or more of Claims 2-7;
b) a bus system (1) which couples the first transmission/reception apparatus (2) at least to a second transmission/reception apparatus (3); and
c) the second transmission/reception apparatus (3), which has:
(c1) a first means which receives the data transmission block (DB) sent by the first transmission/reception apparatus (2);
(c2) a second means which checks the validity data (G1-Gn) which the received data transmission block (DB) contains; and
(c3) a third means which is suitable for extracting and storing the data units (DE1-DEn) for which the associated validity data item (G1-Gn) is valid and for rejecting those data units (DE1-DEn) for which the associated validity data item (G1-Gn) is invalid.

11. System according to Claim 10, in which the second transmission/reception apparatus (3) has a memory apparatus (4) which is suitable for storing a respective counter reading (Z1-Zn) for a validity data item (G1-Gn) in the form of an N-bit counter.

12. System according to Claim 10 or 11, in which the bus system (1) is in the form of a Flexray bus system and the first transmission/reception apparatus (2) and/or the second transmission/reception apparatus (3) have/has a Flexray communication control apparatus (5, 6).

## Revendications

1. Procédé pour envoyer un bloc de transmission de données (DB), lequel présente au moins un segment de données (DS) comprenant un nombre prédéfini d'une ou plusieurs unités de données (DE1-DEn) à identifier avec une indication de validité et un segment d'en-tête (KS), le procédé étant **caractérisé en ce qu'**il inclut les étapes suivantes :
a) écriture d'une unité de données (DE1-DEn) dans une première zone (A1) prédéfinie pour le segment de données (DS) d'un registre de sortie (A) à partir duquel le bloc de transmission de données (DB) mémorisé temporairement sera envoyé à un instant d'envoi prédéfini au moyen d'un procédé de multiplexage dans le temps par le biais d'un système de bus (1) ;
b) écriture d'une date de validité (G1-Gn), réalisée sous la forme d'un bit de basculement ou d'un compteur à N bits, dans une deuxième zone (A2) prédéfinie pour le segment d'en-tête (KS) du registre de sortie (A), la date de validité (G1-Gn) respective indiquant la validité de l'unité de données (DE1-DEn) écrite correspondante ;
c) libération pour l'envoi du bloc de transmission de données (DB) mémorisé temporairement dans le registre de sortie (A) après que l'unité de données (DE1-DEn) respective et la date de validité (G1-Gn) correspondante aient été écrites dans le registre de sortie (A) ;
d) répétition des étapes (a) - (c) jusqu'à ce que le nombre prédéfini d'unités de données (DE1-DEn) et les dates de validité (G1-Gn) correspondantes soient écrits ou que l'instant d'envoi prédéfini soit atteint ; et
e) envoi du bloc de transmission de données (DB) libéré, mémorisé temporairement dans le registre de sortie (A), à l'instant d'envoi.

2. Procédé selon la revendication 1, selon lequel le bloc de transmission de données (DB) présente un segment de somme de contrôle (PS), une somme de contrôle (PS1-PS3) étant calculée sur au moins une partie prédéfinie du segment de données (DS) et/ou du segment d'en-tête (KS) et la somme de contrôle (PS1-PS3) calculée étant mise en mémoire dans une troisième zone (A3) prédéfinie pour le segment de somme de contrôle (PS) du registre de sortie (A).

3. Procédé selon la revendication 1 ou 2, selon lequel le système de bus (1) est réalisé sous la forme d'un système de bus Flexray.

4. Procédé selon la revendication 1 ou selon l'une des revendications 2 ou 3, selon lequel la date de validité (G1-Gn) est réalisée sous la forme du bit basculant, le bit basculant respectif changeant d'état à chaque écriture de l'unité de données (DE1-DEn) correspondante.

5. Procédé selon la revendication 1 ou selon l'une des revendications 2 ou 3, selon lequel la date de validité (G1-Gn) est réalisée sous la forme du compteur à N bits, le compteur à N bits respectif étant incrémenté ou décrémenté d'une plage de comptage prédéfinie à chaque écriture de l'unité de données (DE1-DEn) correspondante.

6. Procédé selon la revendication 5, selon lequel les compteurs à N bits sont respectivement initialisés pour les différentes unités de données (DE1-DEn) avec une valeur d'initialisation différente.

7. Procédé selon la revendication 5 ou 6, selon lequel le compteur à N bits respectif est incrémenté ou décrémenté de un à chaque écriture de l'unité de données (DE1-DEn) correspondante.

8. Procédé de transmission de blocs de transmission de données (DB) comprenant les étapes suivantes :
a) envoi d'un bloc de transmission (DB) au moyen d'un premier dispositif d'émission/réception (2) conformément au procédé pour envoyer un bloc de transmission de données (DB) selon la revendication 1 ou une ou plusieurs des revendications 2 à 7 ;
b) réception du bloc de transmission de données (DB) envoyé au moyen d'un deuxième dispositif d'émission/réception (3) qui est connecté au premier dispositif d'émission/réception (2) au moyen du système de bus (1) ;
c) contrôle des dates de validité (G1-Gn) contenues dans le bloc de transmission de données (DB) reçu ; et
d) extraction et mise en mémoire des unités de données (DE1-DEn) dont la date de validité (G1-Gn) associée est valide et rejet des unités de données (DE1-DEn) dont la date de validité (G1-Gn) associée n'est pas valide, au moyen du deuxième dispositif d'émission/réception (3).

9. Procédé selon la revendication 8, selon lequel la date de validité (G1-Gn) est réalisée sous la forme du compteur à N bits, le compteur à N bits respectif étant incrémenté ou décrémenté d'une plage de comptage prédéfinie au moyen du premier dispositif d'émission/réception (2) à chaque écriture de l'unité de données (DE1-DEn) correspondante, et la valeur de comptage respective du compteur à N bits étant mise en mémoire au moyen d'un dispositif de mémorisation (4) du deuxième dispositif d'émission/réception (3).

10. Système de transmission d'un bloc de transmission de données (DB), lequel présente au moins un segment de données (DS) comprenant un nombre prédéfini d'une ou plusieurs unités de données (DE1-DEn) à identifier avec une indication de validité et un segment d'en-tête (KS), le système étant **caractérisé en ce qu'**il inclut les caractéristiques suivantes :
a) un premier dispositif d'émission/réception (2) qui est conçu pour mettre en oeuvre un procédé pour envoyer un bloc de transmission de données (DB) selon la revendication 1 ou une ou plusieurs des revendications 2 à 7 ;
b) un système de bus (1) qui connecte le premier dispositif d'émission/réception (2) au moins avec un deuxième dispositif d'émission/réception (3) ; et
c) le deuxième dispositif d'émission/réception (3) qui présente :
(c1) un premier moyen qui reçoit le bloc de transmission de données (DB) envoyé par le premier dispositif d'émission/réception (2) ;
(c2) un deuxième moyen qui contrôle les dates de validité (G1-Gn) contenues dans le bloc de transmission de données (DB) reçu ; et
(c3) un troisième moyen qui est conçu pour extraire et mettre en mémoire les unités de données (DE1-DEn) dont la date de validité (G1-Gn) associée est valide et pour rejeter les unités de données (DE1-DEn) dont la date de validité (G1-Gn) associée n'est pas valide.

11. Système selon la revendication 10, dans lequel le deuxième dispositif d'émission/réception (3) présente un dispositif de mémorisation (4) qui est conçu pour mettre en mémoire à chaque fois une valeur de comptage (Z1-Zn) d'une date de validité (G1-Gn) réalisée sous la forme d'un compteur à N bits.

12. Système selon la revendication 10 ou 11, dans lequel le système de bus (1) est réalisé sous la forme d'un système de bus Flexray et le premier dispositif d'émission/réception (2) et/ou le deuxième dispositif d'émission/réception (3) présente(nt) un dispositif de commande de communication Flexray (5, 6).
